(19) Europäisches Patentamt / European Patent Office / Office européen des brevets

(11) **EP 3 465 156 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(21) Anmeldenummer: **17727541.9**

(22) Anmeldetag: **24.05.2017**

(51) Int Cl.:
***G01N 21/64*** (2006.01)

(86) Internationale Anmeldenummer:
**PCT/EP2017/062656**

(87) Internationale Veröffentlichungsnummer:
**WO 2017/202980 (30.11.2017 Gazette 2017/48)**

(54) **FLUORESZENZLEBENSDAUER-MIKROSKOPIEVERFAHREN MIT ZEITKORRELIERTER EINZELPHOTONENZÄHLUNG WELCHES HÖHERE LICHTINTENSITÄTEN ZULÄSST, UND ENTSPRECHENDE VORRICHTUNG**

FLUORESCENCE LIFETIME MICROSCOPIC METHOD WITH TIME-CORRELATED SINGLE PHOTON COUNTING WHICH ALLOWS HIGHER LIGHT INTENSITIES, AND CORRESPONDING DEVICE

MÉTHODE DE MICROSCOPIE POUR DÉTERMINER LA DURÉE DE VIE DE FLUORESCENCE BASÉ SUR LE COMPTAGE MONOPHOTONIQUE À CORRELATION TEMPORELLE QUI PERMET DES INTENSITÉS LUMINEUSES SUPÉRIEURES, ET DISPOSITF CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2016 DE 102016109723**

(43) Veröffentlichungstag der Anmeldung:
**10.04.2019 Patentblatt 2019/15**

(73) Patentinhaber: **Leica Microsystems CMS GmbH 35578 Wetzlar (DE)**

(72) Erfinder:
• **SEYFRIED, Volker**
  **69226 Nußloch (DE)**
• **WIDZGOWSKI, Bernd**
  **69221 Dossenheim (DE)**
• **HECHT, Frank**
  **68161 Mannheim (DE)**

(74) Vertreter: **Schaumburg und Partner Patentanwälte mbB
Postfach 86 07 48
81634 München (DE)**

(56) Entgegenhaltungen:
DE-A1-102011 055 330

• **Michael Wahl: "The Principle of Time-Correlated Single Photon Counting", PicoQuant Technical Note, 24. Juni 2014 (2014-06-24), Seiten 1-14, XP055135297, Gefunden im Internet: URL:http://www.picoquant.com/images/uploads/page/files/7253/technote_tcspc.pdf [gefunden am 2014-08-19]**
• **JOCHEN ARLT ET AL: "A study of pile-up in integrated time-correlated single photon counting systems", REVIEW OF SCIENTIFIC INSTRUMENTS., Bd. 84, Nr. 10, 10. Oktober 2013 (2013-10-10), Seite 103105, XP055278177, US ISSN: 0034-6748, DOI: 10.1063/1.4824196**
• **SEBASTIAN ISBANER ET AL: "Dead-time correction of fluorescence lifetime measurements and fluorescence lifetime imaging", OPTICS EXPRESS, Bd. 24, Nr. 9, 21. April 2016 (2016-04-21), Seiten 9429-9445, XP055396466, DOI: 10.1364/OE.24.009429**

EP 3 465 156 B1

## Beschreibung

Die Erfindung betrifft ein Fluoreszenzlebensdauer-Mikroskopieverfahren mit zeitkorrelierter Einzelphotonenzählung nach dem Oberbegriff des Anspruchs 1 sowie ein Mikroskop zur Durchführung eines solchen Verfahrens nach dem Oberbegriff des Anspruchs 15.

Die Fluoreszenzlebensdauer-Mikroskopie, kurz FLIM ("fluorescence lifetime imaging microscopy") ist ein bildgebendes fluoreszenzmikroskopisches Verfahren, das auf der Messung der unterschiedlichen Lebensdauern von angeregten Zuständen fluoreszierender Moleküle beruht. Anhand der gemessenen Lebensdauern kann beispielsweise auf die Eigenschaften der Umgebung des fluoreszierenden Moleküls wie pH-Wert, Temperatur, Ionenkonzentration, FRET-Übergänge (FRET = "Förster Resonance Energy Transfer") etc. geschlossen werden.

Die Bestimmung der Fluoreszenzlebensdauer kann direkt im Zeitbereich ("time domain lifetime measurement") oder in einem alternativen Verfahren im Frequenzbereich ("frequency domain lifetime measurement") erfolgen. Eine Bestimmung im Zeitbereich ist nach dem Verfahren der sog. zeitkorrelierten Einzelphotonenzählung, kurz TCSPC ("time correlated single photon counting") möglich. Bei diesem Verfahren werden die durch periodische Anregung mit Anregungslichtimpulsen freigesetzten Photonen einzeln erfasst. Dementsprechend wird hierzu ein Detektor benötigt, der eine solche Einzelphotonenerfassung ermöglicht. Die eingesetzten Anregungslichtimpulse haben dabei in der Regel eine Impulsdauer im Pikosekundenbereich, die deutlich kürzer ist als eine typische, im Nanosekundenbereich liegende Fluoreszenzlebensdauer. Gemessen wird typischerweise die Zeit zwischen einem Anregungslichtimpuls und dem darauf folgenden, von dem Detektor erfassten Fluoreszenzsignal. Die so erfassten Fluoreszenzphotonen werden dann über eine Vielzahl von Messungen in einem Histogramm zusammengetragen. In einem solchen Histogramm ist die Photonenzahl gegen die gemessene Zeit aufgetragen. Auf diese Weise kann in der Regel eine zeitabhängige exponentielle Abnahme der durch die erfassten Einzelphotonen repräsentierten Fluoreszenzintensität beobachtet werden, aus der die Fluoreszenzlebensdauer bestimmt wird.

Ein Problem des vorstehend beschriebenen, auf einer Einzelphotonenzählung beruhenden Verfahrens liegt nun darin, dass herkömmliche Detektoren unmittelbar nach Erfassung eines einzelnen Photons über eine gewisse Zeitspanne nicht wieder bereit sind, ein weiteres Photon nachzuweisen. Diese Zeitspanne wird auch als Totzeit des Detektors bezeichnet. Eine typische Totzeit herkömmlicher Detektoren liegt in einem Bereich von etwa 50 bis 100 ns. Somit ist innerhalb eines betrachteten Messintervalls, das zwischen zwei aufeinander folgenden Anregungslichtimpulsen definiert ist, üblicherweise eine Einschränkung auf das erste detektierte Fluoreszenzphoton gegeben.

Durch die alleinige Betrachtung des nach einem Anregungslichtimpuls jeweils ersten eintreffenden Fluoreszenzphotons kann es zu einer höheren Gewichtung der geringeren Zeitanteile im Histogramm kommen. Diese das Messergebnis verfälschende höhere Gewichtung wird in Fachkreisen auch als Pile-up-Effekt bezeichnet. Um diesen Pile-up-Effekt zu vermeiden, wird die Intensität der einfallenden Anregungslichtimpulse typischerweise so eingestellt, dass pro Anregungslichtimpuls nur 1/10 Photonen freigesetzt wird. Bei dieser Einstellung liegt die Wahrscheinlichkeit, dass pro Anregungslichtimpuls zwei Fluoreszenzphotonen erfasst werden, bei etwa 1 %. Der Pile-up-Effekt kann dann vernachlässigt werden. Jedoch führt eine solch starke Herabsetzung der Anregungslichtintensität zu einer entsprechend langen Aufnahmezeit, die wiederum eine breite Anwendung dieser Methode erschwert.

Zur Lösung des vorstehend erläuterten Problems gibt es im Stand der Technik eine Reihe von Ansätzen. Zum einen wurde in den Druckschriften DE 10 2011 055 330 A1, DE 10 2011 055 945 A1 und DE 10 2011 052 334 A1 eine Parallelisierung der Auswerteelektronik dergestalt vorgeschlagen, dass eine aus dem Detektorsignal gewonnene digitale Datenfolge einem Seriell-Parallel-Wandler zugeführt wird, der eine schnellere Informationsverarbeitung der Datenfolge ermöglicht. Diese Parallelisierung der Auswerteelektronik ist jedoch technisch aufwendig und deshalb mit erheblichen Kosten verbunden.

In der WO 2010/089363 A1 wird eine numerische Korrektur des Pile-up-Effektes vorgeschlagen. Jedoch setzt diese numerische Korrektur ein Modell der zu erwartenden Ergebnisse voraus und ist deshalb nicht universell einsetzbar.

Eine Zeitmesseinrichtung mit hoher Zeitauflösung ist in der DE 43 39 784 A1 offenbart. Diese Einrichtung arbeitet mit einem Zeit-Amplituden-Wandler, dem ein Analog-Digital-Wandler nachgeschaltet ist. Infolge dieser Wandleranordnung ist die Einrichtung vergleichsweise aufwendig. Gleiches gilt für die aus der US 7 999 238 B2 bekannte Zeitmesseinrichtung, bei der ein Zeit-Digital-Wandler eingesetzt wird, dessen wesentlicher Bestandteil eine Kaskade von Komparatoren entlang einer Verzögerungsleitung ist.

Zum Stand der Technik wird schließlich auf die US 7 215 421 B2 verwiesen, aus der ein sog. Time-Gate-Verfahren zur Fluoreszenzlebensdauermessung bekannt ist. Dieses Verfahren kann mit vergleichsweise geringem apparativen Aufwand durchgeführt werden, unterliegt jedoch Einschränkungen hinsichtlich der Zeitauflösung und der Signalausbeute. Ähnliche Nachteile weisen Time-Gate-Verfahren auf, die mit CCD- oder CMOS-Kameras arbeiten.

Aufgabe der Erfindung ist es, ein Fluoreszenzlebensdauer-Mikroskopieverfahren sowie ein zur Durchführung eines solchen Verfahrens ausgebildetes Mikroskop anzugeben, die es ermöglichen, mit vergleichsweise geringem technischen Aufwand die Anregungslichtintensität unter Vermeidung eines Pile-up-Effektes zu erhöhen.

Die Erfindung löst diese Aufgabe durch die Gegenstände der unabhängigen Ansprüche.

Die Erfindung sieht ein Fluoreszenzlebensdauer-Mikroskopieverfahren mit zeitkorrelierter Einzelphotonenzählung vor, bei dem eine Probe mittels einer gepulsten Lichtquelle periodisch mit Anregungslichtimpulsen zur Emission von Fluoreszenzphotonen angeregt wird, wobei zwischen jeweils zwei aufeinanderfolgenden Anregungslichtimpulsen ein Messintervall definiert wird, mittels eines Detektors die Fluoreszenzphotonen erfasst werden und ein die erfassten Fluoreszenzphotonen repräsentierendes analoges Detektorsignal erzeugt wird, auf Grundlage des Detektorsignals Detektionszeiten bestimmt werden, zu denen die Fluoreszenzphotonen innerhalb der jeweiligen Messintervalle von dem Detektor detektiert werden, auf Grundlage der Detektionszeiten der erfassten Fluoreszenzphotonen mindestens eine das Fluoreszenzabklingverhalten charakterisierende Größe bestimmt wird, und anhand der charakterisierenden Größe eine Bildgebung vorgenommen wird. Erfindungsgemäß wird das analoge Detektorsignal innerhalb des jeweiligen Messintervalls in mehreren Abtastintervallen abgetastet und in eine Folge von diskreten, den einzelnen Abtastintervallen zugeordneten Signalwerten umgesetzt. Anhand der zu dem jeweiligen Messintervall gehörenden Folge diskreter Signalwerte wird bestimmt, ob innerhalb des Messintervalls mehr als eine vorbestimmte Zahl an Fluoreszenzphotonen erfasst worden ist. Dieses Messintervall wird für die Bestimmung der das Fluoreszenzabklingverhalten charakterisierenden Größe verworfen, wenn mehr als diese vorbestimmte Zahl an Fluoreszenzphotonen erfasst worden ist, wobei die vorbestimmte Zahl gleich oder größer als 1 ist.

Die Erfindung sieht also eine Unterteilung des jeweiligen zwischen zwei aufeinanderfolgenden Anregungslichtimpulsen definierten Messintervalls in mehrere Abtastintervalle vor, in denen das von dem Detektor gelieferte analoge Detektorsignal digitalisiert wird. Dabei sind die Abtastintervalle deutlich kleiner als die erwartete Fluoreszenzabklingzeit. Diese Digitalisierung des Detektorsignals bietet die Möglichkeit, das Detektorsignal gleichsam einer Mustererkennung zu unterziehen, d.h. innerhalb des Detektorsignals Signalabschnitte zu identifizieren, die einem oder mehreren Photonen zugeordnet sind. Anhand dieser erkannten Signalabschnitte kann dann bestimmt werden, ob in dem jeweils betrachteten Messintervall mehr als eine vorbestimmte Zahl an Fluoreszenzphotonen von dem Detektor erfasst worden ist. Ist dies der Fall, so wird dieses Messintervall für die Bestimmung der das Fluoreszenzabklingverhalten charakterisierenden Größe nicht berücksichtigt. Die vorbestimmte Photonenzahl ist dabei unter Berücksichtigung der Totzeit des verwendeten Detektors so gewählt, dass ein Pile-up-Effekt zuverlässig vermieden wird. Vorzugsweise ist diese Zahl gleich Eins, d.h. sobald zwei, drei oder mehr Photonen innerhalb des betrachteten Messintervalls im Wege der Mustererkennung identifiziert werden, wird dieses Messintervall für die Bestimmung der charakterisierenden Größe verworfen.

Das Messintervall, das zwischen jeweils zwei aufeinanderfolgenden Anregungslichtimpulsen definiert ist, ist nicht notwendigerweise gleich dem zeitlichen Abstand zwischen diesen beiden Impulsen. So ist es auch denkbar, das Messintervall erst eine kurze Zeit nach dem ersten der beiden genannten Anregungslichtimpulse beginnen zu lassen.

Die das Fluoreszenzabklingverhalten charakterisierende Größe ist beispielsweise eine Fluoreszenzabklingzeit, die sich aus einer exponentiellen Fluoreszenzabklingkurve, die über ein Histogramm gewonnen wird, ableiten lässt. Jedoch ist die genannte charakterisierende Größe nicht auf eine solche Abklingzeit beschränkt. Beispielsweise ist es möglich, die charakterisierende Größe aus der Addition mehrerer exponentieller Fluoreszenzabklingkurven und damit unter Berücksichtigung mehrerer Fluoreszenzabklingzeiten zu gewinnen. Ebenso kann die genannte Größe durch die Fluoreszenzabklingkurve selbst repräsentiert sein.

Das erfindungsgemäße Verwerfen von Messintervallen, in denen beispielsweise mehr als ein Fluoreszenzphoton erfasst wird, ermöglicht eine Erhöhung der Anregungslichtintensität bei gleichzeitiger Vermeidung eines unerwünschten Pile-up-Effektes. Wie eingangs erwähnt, arbeiten vergleichbare herkömmliche Verfahren, die auf eine Vermeidung des Pile-up-Effektes abzielen, typischerweise mit Anregungslichtintensitäten, die so gewählt sind, dass pro Anregungslichtimpuls nur 1/10 Fluoreszenzphotonen erfasst werden, was einer Ausbeute von 10 % entspricht. Demgegenüber kann bei dem erfindungsgemäßen Verfahren mit einer optimalen Lichtintensität gearbeitet werden, die in einem Photon pro Messintervall resultiert. Geht man von einer Poisson-Verteilung der Fluoreszenzphotonen aus, so ist die Wahrscheinlichkeit für das Vorhandensein von x Photonen bei einem Erwartungswert von n Photonen gleich

$$P_n(x) = n^x/x! \cdot e^{-n}.$$

Für x = 1 ergibt sich folglich die maximale Anzahl von Photonen pro Anregungslichtimpuls durch

$$P_n(1) = \max \text{ für } n = 1 \text{ zu } P_1(1) = 37\%.$$

Vergleicht man diesen Wert mit der üblichen Ausbeute von 10 %, so ergibt sich eine Steigerung um einen Faktor 3,7.

Vorzugsweise wird das analoge Detektorsignal mittels eines Analog-Digital-Wandlers digitalisiert. Auf diese Weise kann das analoge Detektorsignal besonders einfach in eine Folge diskreter Signalwerte umgesetzt werden, die wiederum der erfindungsgemäßen Mustererkennung zuführbar ist.

Alternativ wird das analoge Detektorsignal mittels eines Komparators unter Anwendung eines Schwellwertes digitalisiert, so dass die diskreten Signalwerte jeweils gleich einem ersten Binärwert oder gleich einem zweiten Binärwert sind. In dieser Ausgestaltung des erfindungsgemäßen Verfahrens können die Signalwerte des durch die Digitalisierung des analogen Detektorsignals erzeugten Datenstroms jeweils nur zwei Werte, z.B. 0 oder 1, annehmen, was die Mustererkennung vereinfacht.

Vorzugsweise wird innerhalb der dem jeweiligen Messintervall zugeordneten Folge diskreter Signalwerte eine Teilfolge von Signalwerten, die alle gleich dem ersten Binärwert sind, als Photonenintervall definiert und das Vorliegen von mehr als einem Fluoreszenzphoton innerhalb des Messintervalls festgestellt, wenn die Zahl der in dem Photonenintervall enthaltenen Abtastintervalle eine vorgegebene Abtastintervallzahl übersteigt. Diese Definition eines Photonenintervalls macht es möglich, auf besonders einfache Weise festzustellen, ob innerhalb des betrachteten Messintervalls mehr als ein Photon erfasst worden ist, und ggf. dieses Messintervall für die Bestimmung der das Fluoreszenzabklingverhalten charakterisierenden Größe zu verwerfen.

Vorzugsweise wird innerhalb eines Messintervalls dasjenige Abtastintervall, das als erstes den ersten Binärwert aufweist, als Anfang des Photonenintervalls definiert, während dasjenige Abtastintervall, das als nächstes den zweiten Binärwert aufweist, als Ende des Photonenintervalls definiert wird, wobei die genannte Zahl anhand des Anfangs und des Endes des Photonenintervalls bestimmt wird. In dieser Ausführungsform reduziert sich die erfindungsgemäße Mustererkennung somit auf eine Bestimmung des ersten Abtastintervalls beispielsweise mit dem Wert 1 als Start des Photonenintervalls sowie auf die Bestimmung des ersten Abtastintervalls beispielsweise mit dem Wert 0 als Ende des Photonenintervalls.

In einer besonders bevorzugten Ausführung wird die Intensität der Anregungslichtimpulse für einen vorbestimmten Bildpunkt in einer Referenzmessung nach folgender Beziehung ermittelt:

$$I_{ex}(x,y) = I \cdot N(x,y,0)/N(x,y,1)$$

worin

$I$ die Intensität bei der Referenzmessung bezeichnet,
$I_{ex}$ die zu ermittelnde Intensität bezeichnet,
$N(x,y,k)$ die Gesamtzahl an Messintervallen bezeichnet, in denen $k=1$ bzw. $k=0$ Fluoreszenzphotonen erfasst worden sind, und
$(x,y)$ den Ort des Bildpunktes bezeichnet.

Die Intensität des Anregungslichtimpulses kann für den vorbestimmten Bildpunkt vorzugsweise so eingestellt werden, dass die Gesamtzahl an Messintervallen, in denen jeweils genau ein Fluoreszenzphoton erfasst wird, gleich der Gesamtzahl an Messintervallen ist, in denen kein Fluoreszenzphoton erfasst wird.

Vorzugsweise wird das erfindungsgemäße Mikroskopieverfahren unter Verwendung eines konfokalen Scanmikroskops oder eines Multiphotonenmikroskops durchgeführt. So weist sowohl ein konfokales Scanmikroskop als auch ein Multiphotonenmikroskop ohnehin schon einen wesentlichen Teil der zur Durchführung des erfindungsgemäßen Verfahrens benötigten Gerätetechnik auf, insbesondere eine gepulste Laserlichtquelle.

Eine besonders bevorzugte Ausführungsform sieht die Anwendung des vorstehend skizzierten Verfahrens nicht auf das gesamte Messintervall, sondern auf verschiedene Intervallsegmente vor, die innerhalb des Messintervalls definiert sind. Diese Weiterbildung kann also als eine Erweiterung des allein auf das gesamte Messintervall bezogenen Grundverfahrens angesehen werden. Bei dieser Erweiterung des Grundverfahrens werden innerhalb des jeweiligen Messintervalls verschiedene Intervallsegmente definiert, wobei dann die Bestimmung, ob innerhalb des Messintervalls mehr als die vorbestimmte Zahl an Fluoreszenzphotonen erfasst worden ist, für jedes dieser Intervallsegmente separat durchgeführt wird. Wenn innerhalb des betrachteten Intervallsegments mehr als die vorbestimmte Zahl an Fluoreszenzphotonen erfasst worden ist, wird dieses Intervallsegment für die Bestimmung der das Fluoreszenzabklingverhalten charakterisierenden Größe verworfen. Hierbei weist jedes Intervallsegment mehrere Abtastintervalle auf.

Durch die bei dieser Erweiterung des Grundverfahrens vorgesehene Unterteilung des Messintervalls in verschiedene Intervallsegmente kann die Photonenausbeute erheblich erhöht werden. Die erfindungsgemäße Definition verschiedener Intervallsegmente ist dabei so zu verstehen, dass eines dieser Intervallsegmente auch durch das Messintervall selbst gegebenen sein kann.

Vorzugsweise wird für jedes Intervallsegment des jeweiligen Messintervalls die das Fluoreszenzabklingverhalten charakterisierende Größe bestimmt und aus den für die einzelnen Intervallsegmente bestimmten charakterisierenden Größen die auf das gesamte Messintervall bezogene charakterisierende Größe ermittelt. Ist beispielsweise die das Fluoreszenzabklingverhalten charakterisierende Größe durch eine Fluoreszenzabklingkurve gegeben, so werden in dieser Ausführungsform die auf die verschiedenen Intervallsegmente bezogenen Fluoreszenzabklingkurven, die im Weiteren auch als segmentale Abklingkurven bezeichnet werden, zu einer auf das gesamte Messintervall bezogenen Gesamtabklingkurve zusammengesetzt.

Vorzugsweise wird die auf das gesamte Messintervall bezogene charakterisierende Größe anhand eines Faktors ermittelt, der aus der Anzahl an Intervallsegmenten, in denen die vorbestimmte Zahl an Fluoreszenzphotonen erfasst worden ist, und der Anzahl an Intervallsegmenten, in denen kein Photon erfasst worden ist, bestimmt wird. Dieser Faktor sorgt insbesondere dafür, dass die für die einzelnen Intervallsegmente separat bestimmten Abklingkurven zu einer stetigen Gesamtabklingkurve zusammengesetzt werden können, die dann der weiteren Auswertung zuzuführen ist.

Vorzugsweise wird die auf das gesamte Messintervall bezogene charakterisierende Größe anhand einer Modellfunktion ausgewertet, in der die Zahl der in den Intervallsegmenten erfassten Fluoreszenzphotonen berücksichtigt ist. Dabei kann die vorgenannte Modellfunktion unter Berücksichtigung der dem Verfahren zugrunde gelegten Photonenstatistik geeignet gewählt werden.

In einer weiteren Ausführungsform umfassen die verschiedenen Intervallsegmente mindestens zwei Segmente, die innerhalb des Messintervalls mit oder ohne zeitlichen Überlapp aneinander anschließen.

In einer alternativen Ausführung umfassen die verschiedenen Intervallsegmente ein erstes Segment, das durch das Messintervall gegeben ist, und mindestens ein zweites Segment, dessen Anfang gegenüber dem Anfang des Messintervalls verzögert ist und dessen Ende mit dem Ende des Messintervalls zusammenfällt. In dieser Ausführungsform lässt sich eine zeitliche Staffelung der Intervallsegmente realisieren, mit der die Ausbeute an Fluoreszenzphotonen gesteigert werden kann.

Nach einem weiteren Aspekt der Erfindung ist ein Mikroskop zum Durchführen eines Fluoreszenzlebensdauer-Mikroskopieverfahrens mit zeitkorrelierter Einzelphotonenzählung gemäß dem nebengeordneten Anspruch 16 vorgesehen.

Demgemäß umfasst das Mikroskop zum Durchführen eines Fluoreszenzlebensdauer-Mikroskopieverfahrens mit zeitkorrelierter Einzelphotonenzählung eine Lichtquelle, einen Detektor und eine Verarbeitungseinheit. Die Lichtquelle ist ausgebildet, eine Probe mit Anregungslichtimpulsen zur Emission von Fluoreszenzphotonen anzuregen. Zwischen jeweils zwei aufeinanderfolgenden Anregungslichtimpulsen ist ein Messintervall definiert. Der Detektor ist ausgebildet, die Fluoreszenzphotonen zu erfassen und ein die erfassten Fluoreszenzphotonen repräsentierendes analoges Detektorsignal zu erzeugen. Die Verarbeitungseinheit ist ausgebildet, auf Grundlage des Detektorsignals Detektionszeiten zu bestimmen, zu denen die Fluoreszenzphotonen innerhalb der jeweiligen Messintervalle von dem Detektor detektiert werden, auf Grundlage der Detektionszeiten der erfassten Fluoreszenzphotonen mindestens eine das Fluoreszenzabklingverhalten charakterisierende Größe zu bestimmen, und anhand der charakterisierenden Größe eine Bildgebung vorzunehmen. Erfindungsgemäß ist die Verarbeitungseinheit ausgebildet, das analoge Detektorsignal innerhalb des jeweiligen Messintervalls in mehreren Abtastintervallen abzutasten und in eine Folge von diskreten, den einzelnen Abtastintervallen zugeordneten Signalwerten umzusetzen. Die Verarbeitungseinheit ist ausgebildet, an Hand der zu dem jeweiligen Messintervall gehörenden Folge diskreter Signalwerte zu bestimmen, ob innerhalb des Messintervalls mehr als eine vorbestimmte Zahl an Fluoreszenzphotonen erfasst worden ist, und dieses Messintervall für die Bestimmung der das Fluoreszenzabklingverhalten charakterisierenden Größe zu verwerfen, wenn mehr als diese vorbestimmte Zahl an Fluoreszenzphotonen erfasst worden ist, wobei die vorbestimmte Zahl gleich oder größer als 1 ist.

Bevorzugt umfasst die Verarbeitungseinheit einen Analog-Digital-Wandler, der ausgebildet ist, das analoge Detektorsignal zu digitalisieren. Die Verarbeitungseinheit könnte einen Komparator umfassen, der ausgebildet ist, das analoge Detektorsignal unter Anwendung eines Schwellwertes zu digitalisieren, so dass die diskreten Signalwerte jeweils gleich einem ersten Binärwert oder gleich einem zweiten Binärwert sind.

In einer bevorzugten Ausführung des erfindungsgemäßen Mikroskops ist zusätzlich zu dem zur Erfassung der Fluoreszenzphotonen bestimmten Detektor ein weiterer Detektor vorgesehen, der ausgebildet ist, die Anregungslichtimpulse zu erfassen und ein die erfassten Anregungslichtimpulse repräsentierendes analoges Anregungssignal zu erzeugen, wobei die Verarbeitungseinheit ausgebildet ist, das analoge Anregungssignal entsprechend den Abtastintervallen abzutasten und in eine Folge von diskreten, den einzelnen Abtastintervallen zugeordneten Anregungssignalwerten umzusetzen. Diese Folge von diskreten Anregungssignalwerten bildet einen Datenstrom, der zur Festlegung der Messintervalle und somit als Referenz für die ermittelten Detektionszeiten der Fluoreszenzphotonen genutzt wird.

Vorzugsweise umfasst die Verarbeitungseinheit ein Anzeigegerät zur Darstellung von Einstellinformationen. Mit den auf dem Anzeigegerät dargestellten Einstellinformationen können dem Benutzer Hilfsmittel angeboten werden, die es ihm ermöglichen, das Mikroskop bzw. die Arbeitsweise der Verarbeitungseinheit optimal einzustellen. Beispielsweise kann dem Benutzer die durchschnittliche Anzahl der Fluoreszenzphotonen im Messintervall zur Kenntnis gebracht werden. Dabei kann sich die durchschnittliche Photonenzahl auf den gesamten Bildaufnahmebereich oder nur auf einen Teilbereich desselben beziehen. Die Einstellinformation kann dem Benutzer in Form von Zahlen und/oder in Form einer graphischen Darstellung angezeigt werden. Für die Bildaufnahme an nur einem Probenort können die Einstellinformationen beispielsweise in Form von zwei Balkensymbolen angezeigt werden, welche beispielsweise die Anzahl der Messintervalle ohne Fluoreszenzphoton und die Anzahl der Messinterwalle beispielsweise mit einem einzigen Fluoreszenzphoton angeben. Der Benutzer kann dann die Anregungslichtintensität so einstellen, dass beide Balkensymbole auf dem Anzeigegerät die gleiche Länge haben.

Die Erfindung wird im Folgenden anhand der Figuren näher erläutert. Darin zeigen:

Figur 1 ein konfokales Scanmikroskop, das ein Ausführungsbeispiel des erfindungsgemäßen Mikroskops darstellt;

Figur 2 ein Diagramm, das die erfindungsgemäße Abtastung eines analogen Detektorsignals veranschaulicht;

Figur 3 ein Diagramm, das die erzeugten Laser- und Detektorsignale anhand eines Beispiels zeigt, in dem innerhalb des betrachteten Messintervalls genau ein Fluoreszenzphoton erfasst wird;

Figur 4 ein Histogramm, welches sich auf das Beispiel nach Figur 3 bezieht;

Figur 5 ein Diagramm, das weitere beispielhafte Laser- und Detektorsignale zeigt;

Figuren 6 bis 9 Diagramme, die verschiedene Beispiele für eine Segmentierung des Messintervalls zeigen; und

Figuren 10 bis 13 Diagramme, die zeigen, wie segmentierte Fluoreszenzabklingkurven aneinander angepasst werden.

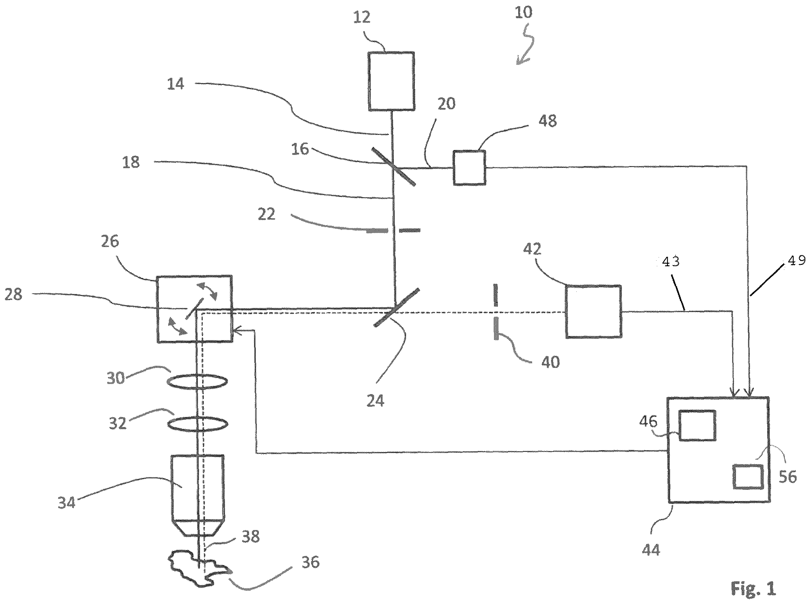

Figur 1 zeigt ein konfokales Scanmikroskop 10, welches ein Ausführungsbeispiel des erfindungsgemäßen Mikroskops darstellt.

Das konfokale Scanmikroskop 10 weist eine gepulste Laserlichtquelle 12 auf, die ausgebildet ist, Licht mit periodischen Anregungslichtimpulsen zu emittieren. Das in Figur 1 mit 14 bezeichnete Anregungslicht fällt auf einen Strahlteiler 16, der das Anregungslicht 14 in einen transmittierten Anteil 18 und einen reflektierten Anteil 20 aufspaltet.

Das durch den Strahlteiler 16 transmittierte Anregungslicht 18 tritt durch eine Anregungslochblende 22 und wird dann an einem dichroitischen Strahlenteiler 24 in Richtung einer Scaneinheit 26 reflektiert. Die Scaneinheit 26 enthält einen kardanisch aufgehängten Scanspiegel 28, der das Anregungslicht 14 in Richtung einer Scanlinse 30 reflektiert. Nach Durchtritt durch die Scanlinse 30 und eine Tubuslinse 32 gelangt das Anregungslicht in ein Mikroskopobjektiv 34, welches das Anregungslicht 18 auf eine Probe 36 leitet.

In dem von dem Anregungslicht 18 beleuchteten Bereich der Probe 36 werden fluoreszierende Moleküle zur Emission von Fluoreszenzlicht 38 angeregt. Die das Fluoreszenzlicht 38 bildenden Fluoreszenzphotonen propagieren längs des Lichtwegs, auf dem das Anregungslicht 18 ausgehend von dem dichroitischen Strahlenteiler 24 in die Probe 36 gelangt, in umgekehrter Richtung zurück zu dem Strahlenteiler 24. Nach Durchtritt durch den Strahlenteiler 24 und eine Detektionslochblende 40 gelangt das Fluoreszenzlicht dann zu einem ersten Detektor 42. Der erste Detektor 42 setzt das empfangene Fluoreszenzlicht 38 in ein analoges Detektorsignal 43 um, das dann einer Verarbeitungseinheit 44 zugeführt wird. Die Verarbeitungseinheit 44 ist ausgebildet, das analoge Detektorsignal 43 mit einem vorbestimmten Abtasttakt abzutasten und so das analoge Detektorsignal 43 in ein digitales Detektorsignal umzusetzen. Dieses digitale Detektorsignal ist aus einer Folge von diskreten Signalwerten gebildet, die einzelnen, dem Abtasttakt entsprechenden Abtastintervallen zugeordnet sind. Zum Zwecke der Abtastung des analogen Detektorsignals 43 enthält die Verarbeitungseinheit 44 einen Komparator 46. Anstelle des Komparators 46 kann auch ein Analog-Digital-Wandler vorgesehen sein.

Zusätzlich zu dem ersten Detektor 42, der das empfangene Fluoreszenzlicht 38 in das analoge Detektorsignal umsetzt, verfügt das Scanmikroskop 10 über einen zweiten Detektor 48, der in dem durch den Strahlteiler 16 abgezweigten Strahlengang angeordnet ist. Somit empfängt der zweite Detektor 48 den durch den Strahlteiler 16 reflektierten Anteil 20 des von der Laserlichtquelle 12 emittierten Anregungslichtes 14. Der zweite Detektor 48 setzt das an dem Strahlteiler 16 reflektierte Anregungslicht 20 in ein analoges Anregungssignal 49 um und führt dieses der Verarbeitungseinheit 44 zu. Die Verarbeitungseinheit 44 tastet das ihr zugeführte analoge Anregungssignal 49 mit dem vorbestimmten Abtasttakt ab und setzt so das analoge Anregungssignal 49 in ein digitales Signal um, das aus einer Folge von diskreten, den einzelnen Abtastintervallen zugeordneten Anregungssignalwerten gebildet ist. Hierzu verfügt die Verarbeitungseinheit 44 wiederum über einen Komparator oder einen Analog-Digital-Wandler, der in Figur 1 nicht explizit gezeigt ist. Das von dem zweiten Detektor 48 gelieferte analoge Anregungssignal 49 und das daraus von der Verarbeitungseinheit 44 erzeugte digitale Signal werden im Weiteren als analoges bzw. digitales Lasersignal bezeichnet.

Die Verarbeitungseinheit 44 ist ferner ausgebildet, die Scaneinheit 28 in an sich bekannter Weise anzusteuern. Außerdem verfügt die Verarbeitungseinheit 44 über ein Anzeigegerät 56, z.B. einen Monitor.

Im Kontext der vorliegenden Erfindung hat die Verarbeitungseinheit 44 insbesondere die Funktion, aus dem von dem Detektor 42 gelieferten analogen Detektorsignal 43 die Detektionszeiten zu bestimmen, zu denen der Detektor 42 die in der Probe 36 ausgelösten Fluoreszenzphotonen empfängt. Auf Grundlage dieser Detektionszeiten bestimmt die Verarbeitungseinheit 44 eine das Fluoreszenzabklingverhalten charakterisierende Größe, z.B. eine Fluoreszenzabklingzeit. Zur Vermeidung des eingangs erläuterten Pile-up-Effektes ist die Verarbeitungseinheit 44 erfindungsgemäß ausgebildet, auf Grundlage des digitalen Detektorsignals zu bestimmen, ob innerhalb eines Messintervalls, das beispielsweise durch zwei aufeinanderfolgende Anregungslichtimpulse definiert ist, mehr als eine vorbestimmte Zahl an Fluoreszenzphotonen von dem Detektor 42 erfasst worden ist. Ist dies der Fall, so schließt die Verarbeitungseinheit 44 dieses Messintervall für die Bestimmung der das Fluoreszenzabklingverhalten charakterisierenden Größe aus.

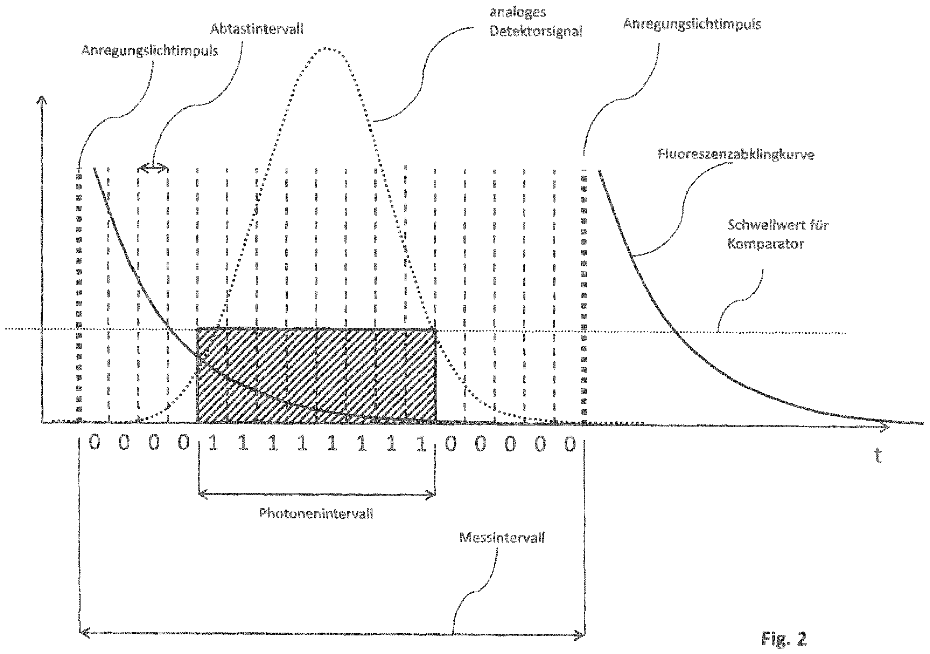

Die vorstehend erläuterte Funktion der Verarbeitungseinheit 44 wird im Folgenden anhand der in den Figuren 2 bis 5 dargestellten Diagramme beispielhaft veranschaulicht. Dabei wird im Weiteren davon ausgegangen, dass die Verarbeitungseinheit 44 das betrachtete Messintervall für die Bestimmung des Fluoreszenzabklingverhaltens verwirft, wenn die Verarbeitungseinheit 44 feststellt, dass innerhalb dieses Messintervalls mehr als ein Fluoreszenzphoton erfasst worden ist.

Das Diagramm nach Figur 2 zeigt ein zwischen zwei aufeinanderfolgenden Anregungslichtimpulsen definiertes Messintervall, innerhalb dessen der Detektor 42 ein Fluoreszenzphoton erfasst und ein entsprechendes analoges Detektorsignal 43 erzeugt. Wie Figur 2 ferner zeigt, wird das Messintervall durch die von der Verarbeitungseinheit 44 vorgenommene Abtastung des analogen Detektorsignals 43 in mehrere Abtastintervalle unterteilt. In Figur 2 ist ferner ein von dem Komparator 46 angewandter Schwellwert gezeigt, auf Grundlage dessen dem analogen Detektorsignal in jedem Abtastintervall entweder der Binärwert 0 oder der Binärwert 1 zugeordnet wird. Ist das analoge Detektorsignal in einem betrachteten Abtastintervall kleiner oder gleich dem Schwellwert, so wird diesem Abtastintervall der Binärwert 0 zugeordnet. Ist dagegen das digitale Detektorsignal in einem Abtastintervall größer als der Schwellwert, so wird diesem Abtastintervall der Binärwert 1 zugeordnet. In dem Beispiel nach Figur 2 ergibt sich so in einem mittleren Bereich des Messintervalls eine Teilfolge von Binärwerten 1, die ein Photonenintervall definieren. Da in dem in Figur 2 gezeigten Beispiel in dem betrachteten Messintervall genau ein Fluoreszenzphoton erfasst wird, wird dieses Messintervall von der Verarbeitungseinheit 44 zur Bestimmung des Fluoreszenzabklingverhaltens berücksichtigt.

In Figur 2 ist zudem eine Fluoreszenzabklingkurve angedeutet, um zu veranschaulichen, dass die Dauer der Abtastintervalle, die dem von der Signalverarbeitungseinheit 44 angewandten Abtasttakt entsprechen, deutlich kürzer sind als die Fluoreszenzabklingzeit.

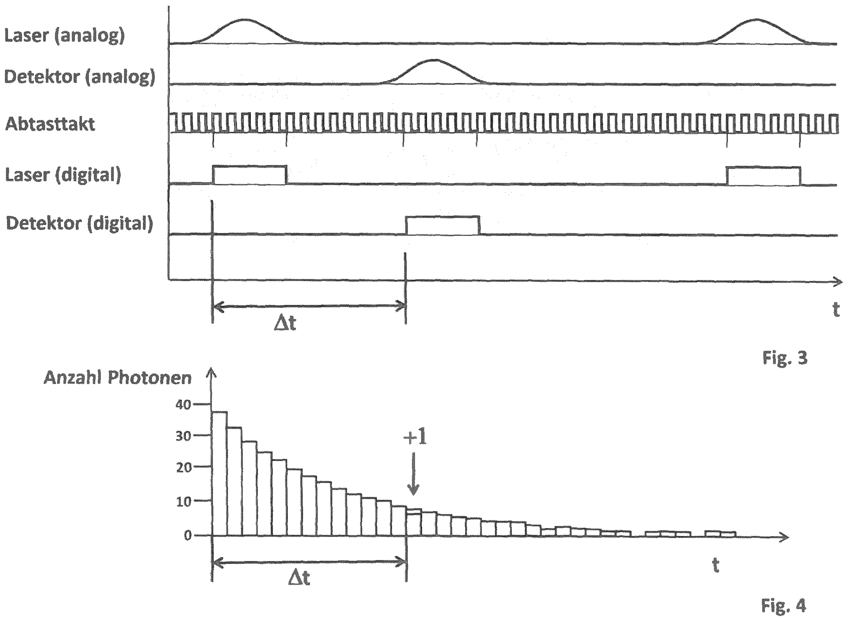

In dem Diagramm nach Figur 3 sind für den Fall, dass innerhalb eines Messintervalls genau ein Fluoreszenzphoton von dem ersten Detektor 42 erfasst wird, das von dem zweiten Detektor 48 erzeugte analoge Lasersignal, das daraus durch Abtastung von der Signalverarbeitungseinheit 44 erzeugte digitale Lasersignal, das von dem ersten Detektor 42 erzeugte analoge Detektorsignal, das daraus von der Signalverarbeitungseinheit 44 erzeugte digitale Detektorsignal sowie der von der Signalverarbeitungseinheit 44 zum Zwecke der Signalabtastung angewandte Abtasttakt dargestellt. Wie der Figur 3 ferner zu entnehmen ist, bestimmt die Signalverarbeitungseinheit 44 die Zeit, zu der innerhalb des betrachteten Messintervalls das Fluoreszenzphoton von dem Detektor 42 erfasst wird, anhand der ansteigenden Flanken des digitalen Lasersignals und des digitalen Detektorsignals. Die Detektionszeit ist in Figur mit Δt bezeichnet.

Die Figur 4 zeigt ein beispielhaftes Histogramm, welches das Ergebnis einer Vielzahl von Einzelmessungen darstellt, wobei in Figur 4 das Symbol "+1" auf das in Figur 3 dargestellte Messintervall Bezug nimmt. So ist die Häufigkeit der Einzelmessungen von detektierten Photonen gezeigt, bei denen die gemessene Detektionszeit jeweils t ergab.

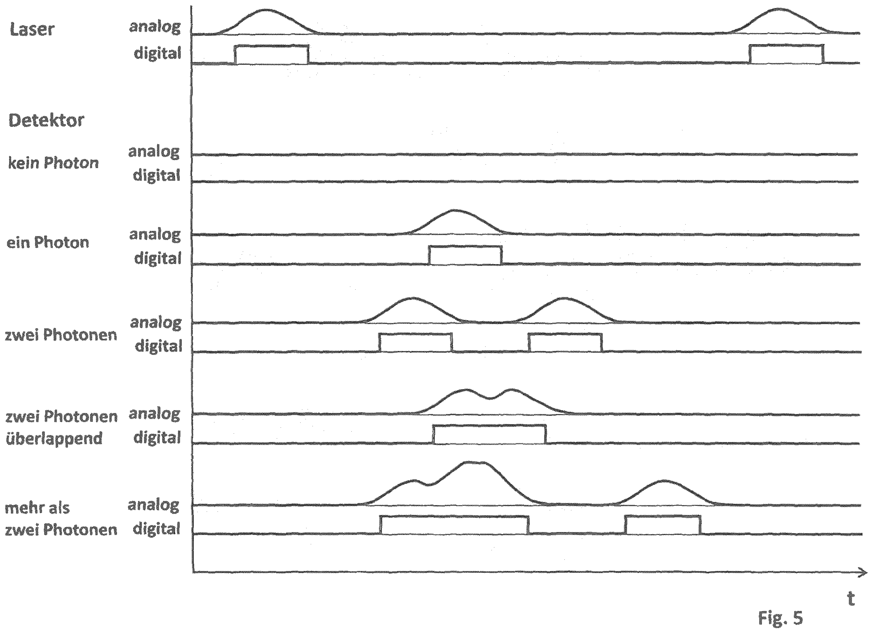

In Figur 5 sind einige beispielhafte Verläufe des analogen bzw. digitalen Lasersignals sowie des analogen bzw. digitalen Detektorsignals dargestellt. In dem vorstehend beschriebenen Ausführungsbeispiel trägt allein der Fall, in dem anhand des Detektorsignals innerhalb eines betrachteten Messintervalls genau ein Photon erfasst wird, zur Bestimmung des Fluoreszenzabklingverhaltens und damit zur Ergänzung eines Histogramms der in Figur 4 gezeigten Art bei. Insbesondere werden diejenigen Messintervalle, in denen zwei oder mehr Photonen erfasst werden, für die Bestimmung der des Fluoreszenzabklingverhalten charakterisierenden Größe verworfen.

Vorstehend wurde unter Bezugnahme auf die Figuren 1 bis 5 ein Ausführungsbeispiel des erfindungsgemäßen Verfahrens erläutert, bei dem das gerade betrachtete Messintervall für die Bestimmung des Fluoreszenzabklingverhaltens verworfen wird, wenn die Verarbeitungseinheit 44 feststellt, dass innerhalb dieses Messintervalls mehr als ein Fluoreszenzphoton erfasst worden ist. In diesem Ausführungsbeispiel bleibt durch das Verwerfen von Messintervallen mit mehr als einem Fluoreszenzphoton ein Anteil von etwa 63 % der insgesamt auf den Detektor 42 treffenden Fluoreszenzphotonen bei der Bestimmung des Fluoreszenzabklingverhaltens ungenutzt. Im Folgenden wird deshalb eine Erweiterung des zuvor beschriebenen Grundverfahrens erläutert, die es ermöglicht, auch einen Anteil der in dem Grundverfahren ungenutzten Fluoreszenzphotonen zur Auswertung heranzuziehen.

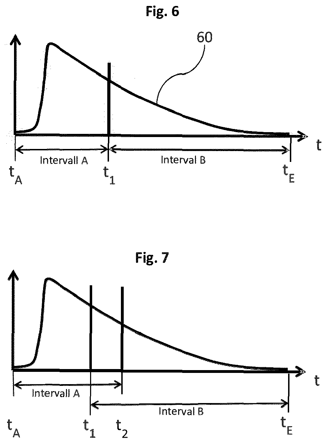

Diese erfindungsgemäße Erweiterung sieht vor, das Grundverfahren auf verschiedene Intervallsegmente anzuwenden, die innerhalb des jeweiligen Messintervalls definiert werden. Ein Beispiel für eine solche Segmentierung des Messintervalls ist in dem Diagramm nach Figur 6 veranschaulicht.

In Figur 6 ist das Messintervall zwischen einem Startzeitpunkt $t_A$ und einem Endzeitpunkt $t_E$ definiert. Bei der Segmentierung nach Figur 6 ist das Messintervall in ein erstes Intervallsegment A und ein zweites Intervallsegment B unterteilt. Das Intervallsegment A reicht von dem Startzeitpunkt $t_A$ bis zu einem Zeitpunkt $t_1$. Das Intervallsegment B

reicht von dem Zeitpunkt $t_1$ bis zu dem Endzeitpunkt $t_E$. In Figur 6 ist zur Veranschaulichung zudem eine Fluoreszenzabklingkurve 60 gezeigt, die sich in Form eines Histogramms ergibt, welches das Ergebnis einer Vielzahl von Einzelmessungen darstellt (entsprechend den Figuren 2 und 4).

Die erfindungsgemäße Erweiterung sieht nun vor, das vorbeschriebene Grundverfahren separat auf die beiden Intervallsegmente A und B anzuwenden. Dies bedeutet, dass für die beiden Intervallsegmente A und B jeweils die das Fluoreszenzabklingverhalten charakterisierende Größe, im vorliegenden Beispiel eine separate Fluoreszenzabklingkurve bestimmt wird. Dabei werden nur diejenigen Intervallsegmente A bzw. B in der Auswertung berücksichtigt, in denen die erfasste Zahl an Fluoreszenzphotonen eine vorbestimmte Zahl, die im vorliegenden Beispiel wiederum gleich 1 sein soll, nicht übersteigt. Ist die Zahl der erfassten Fluoreszenzphotonen in dem jeweiligen Intervallsegment A bzw. B größer als 1, so wird letzteres für die Bestimmung der Fluoreszenzabklingkurve verworfen.

Die in Figur 6 gezeigte Segmentierung des Messintervalls in die beiden aufeinanderfolgenden Segmentintervalle A und B ist rein beispielhaft zu verstehen. So kann das Messintervall auch in anderer Weise segmentiert werden, wie in den Figuren 7 bis 9 veranschaulicht ist.

Figur 7 zeigt eine Segmentierung, bei der die beiden Segmentintervalle A und B zwischen den Zeitpunkten $t_1$ und $t_2$ einen zeitlichen Überlapp aufweisen. So endet das Intervallsegment A erst zum Zeitpunkt $t_2$, der dem Zeitpunkt $t_1$, zu dem das Intervallsegment B beginnt, zeitlich nachgelagert ist.

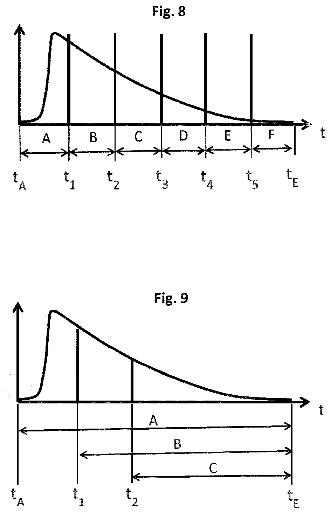

Figur 8 zeigt eine Segmentierung, bei der das Messintervall in mehr als zwei, z.B. sechs Intervallsegmente A bis F unterteilt ist. Wie in Figur 6 schließen bei der Segmentierung nach Figur 8 die einzelnen Intervallsegmente A bis F ohne zeitlichen Überlapp aneinander an.

Figur 9 zeigt eine Definition von drei Intervallsegmenten A, B und C, von denen das Intervallsegment A mit dem Messintervall übereinstimmt, während die beiden anderen Intervallsegmente B und C gegenüber dem Startzeitpunkt $t_A$ des Intervallsegments A gestaffelt verzögerte Startzeitpunkte $t_1$ und $t_2$ aufweisen. Der Endzeitpunkt $t_E$ ist für alle Intervallsegmente A, B und C gleich.

Die in den Figuren 6 bis 9 beispielhaft gezeigten Segmentierungen können auch in geeigneter Weise miteinander kombiniert werden. So können beispielsweise die Intervallsegmente A bis F, die in Figur 8 ohne zeitlichen Überlapp aneinander anschließen, einander zeitlich überlagert werden, wie dies für die beiden Intervallsegmente A und B in Figur 7 veranschaulicht ist.

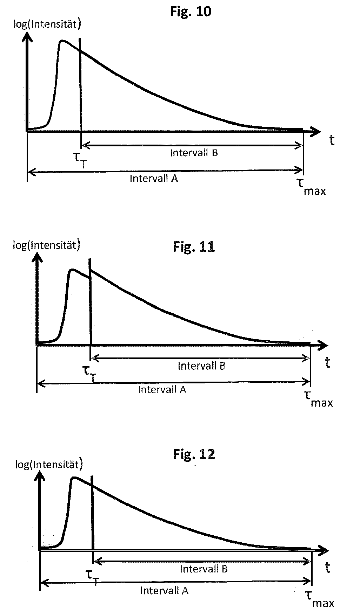

Unter Bezugnahme auf die Figuren 10 bis 13 wird im Folgenden erläutert, wie die für die einzelnen Intervallsegmente separat bestimmten Fluoreszenzabklingkurven zu einer Gesamtkurve zusammengesetzt werden, die auf das gesamte Messintervall bezogen ist. Dabei ist den Figuren 10 bis 13 rein beispielhaft eine Segmentierung mit zwei Intervallsegmenten A und B zugrunde gelegt, wobei das Intervallsegment A gleich dem Messintervall ist, während das Intervallsegment B ein gegenüber dem Messintervall verkürztes Intervall angibt, dessen Startzeitpunkt gegenüber dem Startzeitpunkt des Messintervalls verzögert ist. In den Figuren 10 bis 13 ist der Startzeitpunkt des Intervallsegments B mit $\tau_T$ und der der beiden Intervallsegmenten A und B gemeinsame Endzeitpunkt mit $\tau_{max}$ bezeichnet.

In dem in den Figuren 10 bis 13 gezeigten Beispiel wird gemäß der vorliegenden Erweiterung des Grundverfahrens durch Auswerten einer Vielzahl von Intervallsegmenten B eine separate Fluoreszenzabklingkurve ermittelt. Dabei werden für die Bestimmung dieser segmentalen Fluoreszenzabklingkurve nur diejenigen Intervallsegmente B berücksichtigt werden, in denen nicht mehr als eine vorbestimmte Zahl an Photonen, die im vorliegenden Beispiel gleich 1 ist, erfasst wird. Auf diese Weise kann die Gesamtzahl der in den Intervallsegmenten B erfassten Fluoreszenzphotonen gegenüber dem Fall, in dem das Grundverfahren nur jeweils auf das gesamte Messintervall angewendet wird, erhöht werden.

Wie in Figur 11 gezeigt, ergibt sich durch die Ermittlung der auf das Intervallsegment B bezogenen segmentalen Fluoreszenzabklingkurve ein Sprung gegenüber demjenigen Teil der auf das gesamte Messintervall bezogenen Fluoreszenzabklingkurve, der außerhalb des Intervallsegments B liegt. Die Erweiterung des Grundverfahrens sieht deshalb vor, zur Beseitigung dieses Sprungs, d.h. zur Anpassung der auf das Intervallsegment B bezogenen segmentalen Fluoreszenzabklingkurve an den zeitlich vorgelagerten Teil der auf das gesamte Messintervall bezogenen Fluoreszenzabklingkurve, die Intensitäten in dem Intervallsegment B mit einem Faktor F zu multiplizieren, um eine sprungfreie, d.h. stetige Fluoreszenzabklingkurve gemäß Figur 12 zu erhalten:

$$I(\tau) = \begin{cases} I_{\text{selected photons}}(\tau) & \text{für } \tau \leq \tau_T \\ F \cdot I_{B\text{ selected photons}}(\tau) & \text{für } \tau > \tau_T \end{cases}$$

mit

$$F = \frac{\int_0^{\tau_{\max}} I_{\text{selected photons}}(\tau)d\tau}{\int_0^{\tau_{\max}} I_{\text{all photons}}(\tau)d\tau} \cdot \frac{\int_{\tau_T}^{\tau_{\max}} I_{\text{all photons}}(\tau)d\tau}{\int_{\tau_T}^{\tau_{\max}} I_{B\text{ selected photons}}(\tau)d\tau}.$$

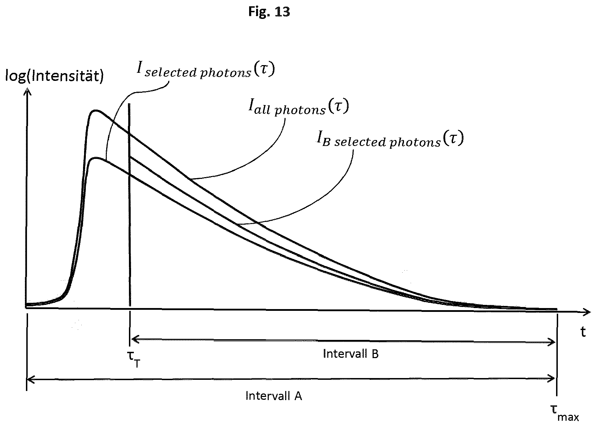

Dabei bezeichnet $I_{\text{selected photons}}(\tau)$ die nach dem Grundverfahren für das gesamte Messintervall ermittelte Fluoreszenzabklingkurve, während $I_{B\text{ selected photons}}(\tau)$ die segmentale Fluoreszenzabklingkurve angibt, die ermittelt wird, wenn das Grundverfahren nur auf das Intervallsegment B angewandt wird. Ferner bezeichnet $I_{\text{all photons}}(\tau)$ eine idealisierte Fluoreszenzabklingkurve unter Auswertung aller Fluoreszenzphotonen, die sich ergäbe, wenn für alle Fluoreszenzphotonen die Empfangszeiten bekannt wären. Die vorgenannten Abklingkurven sind in Figur 13 dargestellt.

Die Funktion $I_{\text{all photons}}(\tau)$ ist nicht exakt aus den aufgenommenen Daten bestimmbar. Jedoch sind die Integrale über die vorgenannten Funktionen aus der Photonenstatistik bekannt:

$$\int_0^{\tau_{\max}} I_{A\text{ selected photons}}(\tau)d\tau = \frac{N_A(1)}{N_A(0)} \cdot e^{-\frac{N_A(1)}{N_A(0)}} \cdot \int_0^{\tau_{\max}} I_{\text{all photons}}(\tau)d\tau$$

und

$$\int_{\tau_T}^{\tau_{\max}} I_{B\text{ selected photons}}(\tau)d\tau = \frac{N_B(1)}{N_B(0)} \cdot e^{-\frac{N_B(1)}{N_B(0)}} \cdot \int_{\tau_T}^{\tau_{\max}} I_{\text{all photons}}(\tau)d\tau.$$

Dabei bezeichnet $N_A(k)$ und $N_b(k)$ die Anzahl der Messintervalle, in denen im Intervallsegment A bzw. *B k* Fluoreszenzphotonen erkannt worden sind. Der Faktor F vereinfacht sich damit zu

$$F = \frac{N_A(1)}{N_A(0)} \cdot \frac{N_B(0)}{N_B(1)} \, e^{\left(\frac{N_B(1)}{N_B(0)} - \frac{N_A(1)}{N_A(0)}\right)}.$$

Durch die Berücksichtigung des Faktors F wird also aus den in Figur 11 dargestellten segmentierten Fluoreszenzabklingkurven, zwischen denen ein Sprung vorhanden ist, die stetige Abklingkurve gemäß Figur 12 konstruiert.

Die in Figur 12 dargestellte Fluoreszenzabklingkurve kann dann unter Anwendung einer für die betrachtete Photonenstatistik geeigneten Modellfunktion $f(\tau)$, die einen exponentiellen Abfall mit einer oder mehreren Komponenten abbildet, ausgewertet werden:

$$f(\tau) = \int_0^{\tau} IRF(x) \cdot \sum_{n=1}^{m} A_n \cdot e^{-\frac{\tau-x}{\tau_n}} \, dx$$

Dabei gibt m die Anzahl der exponentiellen Komponenten, $A_n$ die Amplitude der jeweiligen Komponente, $\tau_n$ die Fluoreszenzlebensdauer der Komponente und $IRF(\tau)$ eine Instrumentenansprechfunktion an.

Zur Bestimmung der Fluoreszenzlebensdauer $\tau_n$ wird beispielsweise ein Verfahren zur nicht-linearen Anpassung der Modellfunktion $f(\tau)$ an die gemäß Figur 12 konstruierte Fluoreszenzabklingkurve angewandt. Ein solches Verfahren ist beispielsweise die Minimierung einer sogenannten Maximum-Likelihood-Schätzfunktion mit Poisson-Statistik, wie es etwa in Bajzer, Z. et al., Maximum-Likelihood Method For The Analysis Of Time-Resolved Fluorescence Decay Curves. European Biophysics Journal, 1991. 20(5): p. 247-262 beschrieben ist. Geht man in dieser Weise vor, so werden die Modellfunktion $f(\tau)$ und die konstruierte Fluoreszenzabklingkurve $I(\tau)$ nach folgender Vorschrift modifiziert:

$$f' = \begin{cases} f(\tau) & \text{für } \tau \leq \tau_T \\ \dfrac{f(\tau)}{F} & \text{für } \tau > \tau_T \end{cases}$$

und

$$I'(\tau) = \begin{cases} I(\tau) & \text{für } \tau \leq \tau_T \\ \dfrac{I(\tau)}{F} & \text{für } \tau > \tau_T \end{cases}$$

Die so modifizierten Funktionen $f(\tau)$ und $I(\tau)$ werden dann zur weiteren Auswertung in an sich bekannter Weise aneinander angepasst.

Die vorstehende Erweiterung des Grundverfahrens kann auch in Fällen angewandt werden, in denen das Messintervall in anderer Weise segmentiert wird, als dies in den Figuren 10 bis 13 dargestellt ist. Insbesondere lässt sich die Photonenausbeute nachhaltig erhöhen, wenn das Messintervall in eine Vielzahl von Intervallsegmenten unterteilt wird, in denen jeweils das vorstehend skizzierte Verfahren angewandt wird. Eine besonders hohe Photonenausbeute erhält man insbesondere dann, wenn bei Aufnahme von M Zeitkanälen eine entsprechende Aufteilung des Messintervalls in M Intervallsegmente erfolgt. In diesem Fall wird zusammen mit der konstruierten Abklingkurve $I(\tau)$ ein Array von Korrekturfaktoren $F(\tau)$ erzeugt und der weiterführenden Auswertung zur Verfügung gestellt.

Bezugszeichenliste

| | |
|---|---|
| 10 | konfokales Abtastmikroskop |
| 12 | gepulste Laserlichtquelle |
| 14 | Anregungslicht |
| 16 | Strahlteiler |
| 18 | transmittiertes Anregungslicht |
| 20 | reflektiertes Anregungslicht |
| 22 | Anregungslochblende |
| 24 | dichroitischer Strahlteiler |
| 26 | Scaneinheit |
| 28 | Scanspiegel |
| 30 | Scanlinse |
| 32 | Tubuslinse |
| 34 | Mikroskopobjektiv |
| 36 | Probe |
| 38 | Fluoreszenzlicht |
| 40 | Detektionslochblende |
| 42 | erster Detektor |
| 43 | analoges Detektorsignal |
| 44 | Verarbeitungseinheit |
| 46 | Komparator oder Analog-Digital-Wandler |
| 48 | zweiter Detektor |
| 49 | analoges Anregungssignal |
| 56 | Anzeigegerät |
| 60 | Fluoreszenzabklingkurve |

**Patentansprüche**

1.   Fluoreszenzlebensdauer-Mikroskopieverfahren mit zeitkorrelierter Einzelphotonenzählung, wobei
eine Probe (36) mittels einer gepulsten Lichtquelle (12) periodisch mit Anregungslichtimpulsen zur Emission von Fluoreszenzphotonen angeregt wird, wobei zwischen jeweils zwei aufeinanderfolgenden Anregungslichtimpulsen ein Messintervall definiert wird,
mittels eines Detektors (42) die Fluoreszenzphotonen erfasst werden und ein die erfassten Fluoreszenzphotonen repräsentierendes analoges Detektorsignal erzeugt wird,
auf Grundlage des Detektorsignals Detektionszeiten bestimmt werden, zu denen die Fluoreszenzphotonen innerhalb der jeweiligen Messintervalle von dem Detektor detektiert werden,

auf Grundlage der Detektionszeiten der erfassten Fluoreszenzphotonen mindestens eine das Fluoreszenzabklingverhalten charakterisierende Größe bestimmt wird, und

anhand der charakterisierenden Größe eine Bildgebung vorgenommen wird,

wobei das analoge Detektorsignal innerhalb des jeweiligen Messintervalls in mehreren Abtastintervallen abgetastet und in eine Folge von diskreten, den einzelnen Abtastintervallen zugeordneten Signalwerten umgesetzt wird, und an Hand der zu dem jeweiligen Messintervall gehörenden Folge diskreter Signalwerte bestimmt wird, ob innerhalb des Messintervalls mehr als eine vorbestimmte Zahl an Fluoreszenzphotonen erfasst worden ist, wobei die vorbestimmte Zahl gleich oder größer als 1 ist,

**dadurch gekennzeichnet, dass** dieses

Messintervall für die Bestimmung der das Fluoreszenzabklingverhalten charakterisierenden Größe verworfen wird, wenn mehr als diese vorbestimmte Zahl an Fluoreszenzphotonen erfasst worden ist.

2. Fluoreszenzlebensdauer-Mikroskopieverfahren nach Anspruch 1, **dadurch gekennzeichnet, dass** die vorbestimmte Zahl gleich 1 ist.

3. Fluoreszenzlebensdauer-Mikroskopieverfahren nach einem der vorhergehenden Ansprüche, **dadurch gekennzeichnet, dass** das analoge Detektorsignal mittels eines Analog-Digital-Wandlers (46) digitalisiert wird.

4. Fluoreszenzlebensdauer-Mikroskopieverfahren nach Anspruch 1 oder 2, **dadurch gekennzeichnet, dass** das analoge Detektorsignal mittels eines Komparators (46) unter Anwendung eines Schwellwertes digitalisiert wird, so dass die diskreten Signalwerte jeweils gleich einem ersten Binärwert oder gleich einem zweiten Binärwert sind.

5. Fluoreszenzlebensdauer-Mikroskopieverfahren nach Anspruch 4, **dadurch gekennzeichnet, dass** innerhalb der dem jeweiligen Messintervall zugeordneten Folge diskreter Signalwerte eine Teilfolge von Signalwerten, die alle gleich dem ersten Binärwerte sind, als Photonenintervall definiert wird und das Vorliegen von mehr als einem Fluoreszenzphoton innerhalb des Messintervalls festgestellt wird, wenn die Zahl der in dem Photonenintervall enthaltenen Abtastintervalle eine vorgegebene Abtastintervallzahl übersteigt.

6. Fluoreszenzlebensdauer-Mikroskopieverfahren nach Anspruch 5, **dadurch gekennzeichnet, dass** innerhalb des Messintervalls dasjenige Abtastintervall, das als erstes den ersten Binärwert aufweist, als Anfang des Photonenintervalls definiert wird, und dasjenige Abtastintervall, das als nächstes den zweiten Binärwert aufweist, als Ende des Photonenintervalls definiert wird, wobei die genannte Zahl an Hand des Anfangs und des Endes des Photonenintervalls bestimmt wird.

7. Fluoreszenzlebensdauer-Mikroskopieverfahren nach einem der vorhergehenden Ansprüche, **dadurch gekennzeichnet, dass** die Intensität der Anregungslichtimpulse für einen vorbestimmten Bildpunkt in einer Referenzmessung nach folgender Beziehung ermittelt wird:

$$I_{ex}(x,y) = I \cdot N(x,y,0)/N(x,y,1)$$

worin

I die Intensität bei der Referenzmessung bezeichnet,
$I_{ex}$ die zu ermittelnde Intensität bezeichnet,
N(x,y,k) die Gesamtzahl an Messintervallen bezeichnet, in denen k=1 bzw. k=0 Fluoreszenzphotonen erfasst worden sind, und
(x,y) den Ort des Bildpunktes bezeichnet.

8. Fluoreszenzlebensdauer-Mikroskopieverfahren nach Anspruch 7, **dadurch gekennzeichnet, dass** die Intensität der Anregungslichtimpulse für den vorbestimmten Bildpunkt so eingestellt wird, dass die Gesamtzahl an Messintervallen, in denen jeweils genau ein Fluoreszenzphoton erfasst wird, gleich der Gesamtzahl an Messintervallen ist, in denen kein Fluoreszenzphoton erfasst wird.

9. Fluoreszenzlebensdauer-Mikroskopieverfahren nach einem der vorhergehenden Ansprüche, **dadurch gekennzeichnet, dass** innerhalb des jeweiligen Messintervalls verschiedene Intervallsegmente definiert werden, die Bestimmung, ob innerhalb des Messintervalls mehr als die vorbestimmte Zahl an Fluoreszenzphotonen erfasst worden ist, für jedes dieser Intervallsegmente separat durchgeführt wird, und
das jeweilige Intervallsegment für die Bestimmung der das Fluoreszenzabklingverhalten charakterisierenden Größe verworfen wird, wenn innerhalb dieses Intervallsegments mehr als die vorbestimmte Zahl an Fluoreszenzphotonen erfasst worden ist.

10. Fluoreszenzlebensdauer-Mikroskopieverfahren nach Anspruch 9, **dadurch gekennzeichnet, dass** für jedes Intervallsegment des jeweiligen Messintervalls die das Fluoreszenzabklingverhalten charakterisierende Größe bestimmt wird, und aus den für die einzelnen Intervallsegmente bestimmten charakterisierenden Größen die auf das gesamte Messintervall bezogene charakterisierende Größe ermittelt wird.

11. Fluoreszenzlebensdauer-Mikroskopieverfahren nach Anspruch 10, **dadurch gekennzeichnet, dass** die auf das gesamte Messintervall bezogene charakterisierende Größe an Hand eines Faktors ermittelt wird, der aus der Anzahl an Intervallsegmenten, in denen die vorbestimmte Zahl an Fluoreszenzphotonen erfasst worden ist, und der Anzahl an Intervallsegmenten, in denen kein Photon erfasst worden ist, bestimmt wird.

12. Fluoreszenzlebensdauer-Mikroskopieverfahren nach Anspruch 10 oder 11, **dadurch gekennzeichnet, dass** die auf das gesamte Messintervall bezogene charakterisierende Größe an Hand einer Modellfunktion ausgewertet wird, in der die Zahl der in den Intervallsegmenten erfassten Fluoreszenzphotonen berücksichtigt ist.

13. Fluoreszenzlebensdauer-Mikroskopieverfahren nach einem der Ansprüche 9 bis 12, **dadurch gekennzeichnet, dass** die verschiedenen Intervallsegmente mindestens zwei Segmente umfassen, die innerhalb des Messintervalls mit oder ohne zeitlichen Überlapp aneinander anschließen.

14. Fluoreszenzlebensdauer-Mikroskopieverfahren nach einem der Ansprüche 9 bis 12, **dadurch gekennzeichnet, dass** die verschiedenen Intervallsegmente ein erstes Segment, das durch das Messintervall gegeben ist, und mindestens ein zweites Segment umfassen, dessen Anfang gegenüber dem Anfang des Messintervalls verzögert ist und dessen Ende mit dem Ende des Messintervalls zusammenfällt.

15. Mikroskop (10) zum Durchführen eines Fluoreszenzlebensdauer-Mikroskopieverfahrens mit zeitkorrelierter Einzelphotonenzählung, umfassend eine Lichtquelle (12), die ausgebildet ist, eine Probe mit Anregungslichtimpulsen zur Emission von Fluoreszenzphotonen anzuregen, wobei zwischen jeweils zwei aufeinanderfolgenden Anregungslichtimpulsen ein Messintervall definiert ist, einen Detektor (42), der ausgebildet ist, die Fluoreszenzphotonen zu erfassen und ein die erfassten Fluoreszenzphotonen repräsentierendes analoges Detektorsignal zu erzeugen, und eine Verarbeitungseinheit (44), die ausgebildet ist, auf Grundlage des Detektorsignals Detektionszeiten zu bestimmen, zu denen die Fluoreszenzphotonen innerhalb der jeweiligen Messintervalle von dem Detektor detektiert werden, auf Grundlage der Detektionszeiten der erfassten Fluoreszenzphotonen mindestens eine das Fluoreszenzabklingverhalten charakterisierende Größe zu bestimmen, und anhand der charakterisierenden Größe eine Bildgebung vorzunehmen,
wobei die Verarbeitungseinheit (44) ausgebildet ist, das analoge Detektorsignal innerhalb des jeweiligen Messintervalls in mehreren Abtastintervallen abzutasten und in eine Folge von diskreten, den einzelnen Abtastintervallen zugeordneten Signalwerten umzusetzen, und
die Verarbeitungseinheit (44) ausgebildet ist, an Hand der zu dem jeweiligen Messintervall gehörenden Folge diskreter Signalwerte zu bestimmen, ob innerhalb des Messintervalls mehr als eine vorbestimmte Zahl an Fluoreszenzphotonen erfasst worden ist, wobei die vorbestimmte Zahl gleich oder größer als 1 ist,
**dadurch gekennzeichnet, dass** dieses Messintervall für die Bestimmung der das Fluoreszenzabklingverhalten charakterisierenden Größe verworfen wird, wenn mehr als diese vorbestimmte Zahl an Fluoreszenzphotonen erfasst worden ist.

16. Mikroskop (10) nach Anspruch 15, **dadurch gekennzeichnet, dass** die Verarbeitungseinheit (44) einen Analog-Digital-Wandler (46) umfasst, der ausgebildet ist, das analoge Detektorsignal zu digitalisieren.

17. Mikroskop (10) nach Anspruch 15, **dadurch gekennzeichnet, dass** die Verarbeitungseinheit (44) einen Komparator (46) umfasst, der ausgebildet ist, das analoge Detektorsignal unter Anwendung eines Schwellwertes zu digitalisieren, so dass die diskreten Signalwerte jeweils gleich einem ersten Binärwert oder gleich einem zweiten Binärwert sind.

18. Mikroskop (10) nach einem der Ansprüche 15 bis 17, **gekennzeichnet durch** einen weiteren Detektor (48), der ausgebildet ist, die Anregungslichtimpulse zu erfassen und ein die erfassten Anregungslichtimpulse repräsentierendes analoges Anregungssignal zu erzeugen, wobei die Verarbeitungseinheit (44) ausgebildet ist, das analoge Anregungssignal entsprechend den Abtastintervallen abzutasten und in eine Folge von diskreten, den einzelnen Abtastintervallen zugeordneten Anregungssignalwerten umzusetzen.

**Claims**

1. Fluorescence lifetime microscopy method with time-correlated single-photon counting, wherein a sample (36) is periodically excited with excitation light pulses using a pulsed light source (12) to emit fluorescence photons, wherein a measurement interval is defined in each case between two consecutive excitation light pulses, the fluorescence photons are captured using a detector (42) and an analogue detector signal representing the captured fluorescence photons is generated, on the basis of the detector signal, detection times at which the fluorescence photons inside the respective measurement intervals are detected by the detector are determined, at least one variable characterizing the fluorescence decay behaviour is determined on the basis of the detection times of the captured fluorescence photons, and imaging is carried out on the basis of the characterizing variable, wherein the analogue detector signal inside the respective measurement interval is sampled in a plurality of sampling intervals and is converted into a series of discrete signal values, which are assigned to the individual sampling intervals, and by means of the series of discrete signal values associated with the respective measurement interval, it is determined whether more than a predetermined number of fluorescence photons have been captured inside the measurement interval, wherein the predetermined number is greater than or equal to 1, **characterized in that** this measurement interval for determining the variable characterizing the fluorescence decay behaviour is discarded if more than this predetermined number of fluorescence photons have been captured.

2. Fluorescence lifetime microscopy method according to Claim 1, **characterized in that** the predetermined number is equal to 1.

3. Fluorescence lifetime microscopy method according to either of the preceding claims, **characterized in that** the analogue detector signal is digitized using an analogue-to-digital converter (46).

4. Fluorescence lifetime microscopy method according to Claim 1 or 2, **characterized in that** the analogue detector signal is digitized using a comparator (46) by applying a threshold value, so that the discrete signal values are in each case equal to a first binary value or equal to a second binary value.

5. Fluorescence lifetime microscopy method according to Claim 4, **characterized in that** inside the series of discrete signal values which is assigned to the respective measurement interval, a subsequence of signal values, which are all equal to the first binary value, is defined as a photon interval and the presence of more than one fluorescence photon inside the measurement interval is identified if the number of the sampling intervals contained in the photon interval exceeds a specified sampling interval number.

6. Fluorescence lifetime microscopy method according to Claim 5, **characterized in that** inside the measurement interval, the sampling interval which first contains the first binary value is defined as the beginning of the photon interval, and the sampling interval which next contains the second binary value is defined as the end of the photon interval, wherein the number mentioned is determined by means of the beginning and the end of the photon interval.

7. Fluorescence lifetime microscopy method according to any of the preceding claims, **characterized in that** the intensity of the excitation light pulses for a predetermined image point is ascertained in a reference measurement according to the following relationship:

$$I_{ex}(x,y) = I \cdot N(x,y,0)/N(x,y,1)$$

where

I indicates the intensity in the reference measurement,
$I_{ex}$ indicates the intensity to be ascertained,

N(x,y,k) indicates the total number of measurement intervals in which k=1 or k=0 fluorescence photons have been captured, and
(x,y) indicates the location of the image point.

8. Fluorescence lifetime microscopy method according to Claim 7, **characterized in that** the intensity of the excitation light pulses for the predetermined image point is set in such a way that the total number of measurement intervals in which in each case exactly one fluorescence photon is captured is equal to the total number of measurement intervals in which no fluorescence photon is captured.

9. Fluorescence lifetime microscopy method according to any of the preceding claims, **characterized in that** different interval segments are defined inside the respective measurement interval, determining whether more than the predetermined number of fluorescence photons have been captured inside the measurement interval is separately implemented for each of these interval segments, and the respective interval segment for determining the variable characterizing the fluorescence decay behaviour is discarded if more than the predetermined number of fluorescence photons have been captured inside this interval segment.

10. Fluorescence lifetime microscopy method according to Claim 9, **characterized in that** the variable characterizing the fluorescence decay behaviour is determined for each interval segment of the respective measurement interval, and the characterizing variable relating to the total measurement interval is ascertained from the characterizing variables determined for the individual interval segments.

11. Fluorescence lifetime microscopy method according to Claim 10, **characterized in that** the characterizing variable relating to the total measurement interval is ascertained by means of a factor, which is determined from the number of interval segments in which the predetermined number of fluorescence photons have been captured and the number of interval segments in which no photon has been captured.

12. Fluorescence lifetime microscopy method according to Claim 10 or 11, **characterized in that** the characterizing variable relating to the total measurement interval is evaluated by means of a model function in which the number of fluorescence photons captured in the interval segments is taken into account.

13. Fluorescence lifetime microscopy method according to any of Claims 9 to 12, **characterized in that** the different interval segments comprise at least two segments, which follow each other inside the measurement interval with or without temporal overlap.

14. Fluorescence lifetime microscopy method according to any of Claims 9 to 12, **characterized in that** the different interval segments comprise a first segment, which is given by the measurement interval, and at least one second segment, the beginning of which is delayed with respect to the beginning of the measurement interval and the end of which coincides with the end of the measurement interval.

15. Microscope (10) for implementing a fluorescence lifetime microscopy method with time-correlated single-photon counting, comprising
a light source (12), which is embodied to excite a sample with excitation light pulses to emit fluorescence photons, wherein a measurement interval is defined between in each case two consecutive excitation light pulses,
a detector (42), which is embodied to capture the fluorescence photons and to generate an analogue detector signal representing the captured fluorescence photons, and
a processing unit (44), which is embodied to determine detection times at which the fluorescence photons inside the respective measurement intervals are detected by the detector on the basis of the detector signal, to determine at least one variable characterizing the fluorescence decay behaviour on the basis of the detection times of the captured fluorescence photons, and to carry out imaging on the basis of the characterizing variable,
wherein the processing unit (44) is embodied to sample the analogue detector signal inside the respective measurement interval in a plurality of sampling intervals and to convert it into a series of discrete signal values, which are assigned to the individual sampling intervals, and
the processing unit (44) is embodied to determine, by means of the series of discrete signal values associated with the respective measurement interval, whether inside the measurement interval more than a predetermined number of fluorescence photons have been captured, wherein the predetermined number is greater than or equal to 1,
**characterized in that**
this measurement interval for determining the variable characterizing the fluorescence decay behaviour is discarded if more than this predetermined number of fluorescence photons have been captured.

**16.** Microscope (10) according to Claim 15, **characterized in that** the processing unit (44) comprises an analogue-to-digital converter (46), which is embodied to digitize the analogue detector signal.

**17.** Microscope (10) according to Claim 15, **characterized in that** the processing unit (44) comprises a comparator (46) which is embodied to digitize the analogue detector signal by applying a threshold value, so that the discrete signal values are in each case equal to a first binary value or equal to a second binary value.

**18.** Microscope (10) according to any of Claims 15 to 17, **characterized by** a further detector (48), which is embodied to capture the excitation light pulses and to generate an analogue excitation signal representing the captured excitation light pulses, wherein the processing unit (44) is embodied to sample the analogue excitation signal in accordance with the sampling intervals and to convert it into a series of discrete excitation signal values, which are assigned to the individual sampling intervals.

**Revendications**

**1.** Procédé de microscopie à durée de vie de fluorescence à comptage de photons uniques corrélé dans le temps, dans lequel

un échantillon (36) est excité périodiquement au moyen d'une source de lumière pulsée (12), par des impulsions lumineuses d'excitation pour l'émission de photons de fluorescence, dans lequel un intervalle de mesure est défini entre deux impulsions lumineuses d'excitation successives respectives,

les photons de fluorescence sont détectés au moyen d'un détecteur (42) et un signal de détecteur analogique représentant les photons de fluorescence détectés est généré,

des instants de détection auxquels les photons de fluorescence sont détectés par le détecteur dans les intervalles de mesure respectifs sont déterminés sur la base du signal du détecteur,

au moins une grandeur caractérisant le comportement de décroissance de la fluorescence est déterminée sur la base des instants de détection des photons de fluorescence détectés, et

une imagerie est réalisée à partir de la grandeur caractérisante,

dans lequel le signal de détecteur analogique est échantillonné en plusieurs périodes d'échantillonnage dans l'intervalle de mesure respectif et est converti en une séquence de valeurs de signal discrètes associées aux périodes d'échantillonnage individuelles, et

il est déterminé si plus d'un nombre prédéterminé de photons de fluorescence ont été détectés dans l'intervalle de mesure à partir de la séquence de valeurs de signal discrètes appartenant à l'intervalle de mesure respectif,

dans lequel le nombre prédéterminé est supérieur ou égal à 1,

**caractérisé en ce que** ledit intervalle de mesure est rejeté pour la détermination de la grandeur caractérisant le comportement de décroissance de la fluorescence si plus que ledit nombre prédéterminé de photons de fluorescence ont été détectés.

**2.** Procédé de microscopie à durée de vie de fluorescence selon la revendication 1, **caractérisé en ce que** le nombre prédéterminé est égal à 1.

**3.** Procédé de microscopie à durée de vie de fluorescence selon l'une des revendications précédentes, **caractérisé en ce que** le signal de détecteur analogique est numérisé au moyen d'un convertisseur analogique-numérique (46).

**4.** Procédé de microscopie à durée de vie de fluorescence selon la revendication 1 ou 2, **caractérisé en ce que** le signal de détecteur analogique est numérisé au moyen d'un comparateur (46) en utilisant une valeur de seuil de manière à ce que les valeurs de signal discrètes soient respectivement égales à une première valeur binaire ou égales à une seconde valeur binaire.

**5.** Procédé de microscopie à durée de vie de fluorescence selon la revendication 4, **caractérisé en ce que**, dans la séquence de valeurs de signal discrètes associée à l'intervalle de mesure respectif, une séquence partielle de valeurs de signal, qui sont toutes égales à la première valeur binaire, est définie comme intervalle de photons et la présence de plus d'un photon de fluorescence dans l'intervalle de mesure est établie lorsque le nombre de périodes d'échantillonnage contenues dans l'intervalle de photons dépasse un nombre prédéterminé de périodes d'échantillonnage.

**6.** Procédé de microscopie à durée de vie de fluorescence selon la revendication 5, **caractérisé en ce que**, dans l'intervalle de mesure, la période d'échantillonnage qui présente la première valeur binaire est définie comme étant le début de l'intervalle de photons, et la période d'échantillonnage qui présente la seconde valeur binaire la plus proche est définie comme étant la fin de l'intervalle de photons, dans lequel ledit nombre est déterminé à l'aide du début et de la fin de l'intervalle de photons.

7. Procédé de microscopie à durée de vie de fluorescence selon l'une des revendications précédentes, **caractérisé en ce que** l'intensité des impulsions lumineuses d'excitation pour un pixel prédéterminé est déterminée lors d'une mesure de référence selon la relation suivante :

$$I_{ex}(x,y) = I \cdot N(x,y,0)/N(x,y,1)$$

où

I désigne l'intensité lors de la mesure de référence, $I_{ex}$ désigne l'intensité à déterminer,
N(x,y,k) désigne le nombre total d'intervalles de mesure dans lesquels k=1 ou k=0 photons de fluorescence ont été détectés, et
(x,y) désigne l'emplacement du pixel.

8. Procédé de microscopie à durée de vie de fluorescence selon la revendication 7, **caractérisé en ce que** l'intensité des impulsions lumineuses d'excitation pour le pixel prédéterminé est réglée de manière à ce que le nombre total d'intervalles de mesure dans lesquels exactement un photon de fluorescence est respectivement détecté soit égal au nombre total d'intervalles de mesure dans lesquels aucun photon de fluorescence n'est détecté.

9. Procédé de microscopie à durée de vie de fluorescence selon l'une des revendications précédentes, **caractérisée en ce que** différents segments d'intervalle sont définis dans l'intervalle de mesure respectif, la détermination du fait de savoir si un nombre de photons de fluorescence supérieur au nombre prédéterminé ont été détectés dans l'intervalle de mesure est effectuée séparément pour chacun desdits segments d'intervalle, et le segment d'intervalle respectif est rejeté pour la détermination de la grandeur caractérisant le comportement de décroissance de la fluorescence si plus que le nombre prédéterminé de photons de fluorescence ont été détectés dans ledit segment d'intervalle.

10. Procédé de microscopie à durée de vie de fluorescence selon la revendication 9, **caractérisé en ce que**, pour chaque segment d'intervalle de l'intervalle de mesure respectif, la grandeur caractérisant le comportement de décroissance de la fluorescence est déterminée, et la grandeur caractérisante se rapportant à l'ensemble de l'intervalle de mesure est déterminée à partir des grandeurs caractérisantes déterminées pour les segments d'intervalle individuels.

11. Procédé de microscopie à durée de vie de fluorescence selon la revendication 10, **caractérisé en ce que** la grandeur caractérisante se rapportant à l'ensemble de l'intervalle de mesure est déterminée à l'aide d'un facteur qui est déterminé à partir du nombre de segments d'intervalle dans lesquels le nombre prédéterminé de photons de fluorescence ont été détectés, et du nombre de segments d'intervalle dans lesquels aucun photon n'a été détecté.

12. Procédé de microscopie à durée de vie de fluorescence selon la revendication 10 ou 11, **caractérisée en ce que** la grandeur caractérisante se rapportant à l'ensemble de l'intervalle de mesure est évaluée à l'aide d'une fonction modèle dans laquelle le nombre de photons de fluorescence détectés dans les segments d'intervalle est pris en compte.

13. Procédé de microscopie à durée de vie de fluorescence selon l'une des revendications 9 à 12, **caractérisé en ce que** les différents segments d'intervalle comprennent au moins deux segments qui se rejoignent à l'intérieur de l'intervalle de mesure avec ou sans chevauchement temporel.

14. Procédé de microscopie à durée de vie de fluorescence selon l'une des revendications 9 à 12, **caractérisé en ce que** les différents segments d'intervalle comprennent un premier segment donné par l'intervalle de mesure et au moins un second segment dont le début est retardé par rapport au début de l'intervalle de mesure et dont la fin coïncide avec la fin de l'intervalle de mesure.

15. Microscope (10) destiné à mettre en œuvre un procédé de microscopie à durée de vie de fluorescence à comptage de photons uniques corrélé dans le temps, comprenant

une source de lumière (12) conçue pour exciter un échantillon avec des impulsions lumineuses d'excitation pour l'émission de photons de fluorescence, dans lequel un intervalle de mesure est défini entre deux impulsions lumineuses d'excitation successives respectives,

un détecteur (42) conçu pour détecter les photons de fluorescence et pour générer un signal de détecteur analogique représentant les photons de fluorescence détectés, et

une unité de traitement (44) qui est conçue pour déterminer, sur la base du signal de détecteur, des instants de détection auxquels les photons de fluorescence sont détectés par le détecteur dans les intervalles de mesure respectifs, pour déterminer au moins une grandeur caractérisant le comportement de décroissance de la fluorescence sur la base des instants de détection des photons de fluorescence détectés, et pour réaliser une imagerie à partir de la grandeur caractérisante,

dans lequel l'unité de traitement (44) est conçue pour échantillonner le signal de détecteur analogique en plusieurs périodes d'échantillonnage dans l'intervalle de mesure respectif et pour le convertir en une séquence de valeurs de signal discrètes associées aux périodes d'échantillonnage individuelles, et

l'unité de traitement (44) est conçue pour déterminer si plus d'un nombre prédéterminé de photons de fluorescence ont été détectés dans l'intervalle de mesure à partir de la séquence de valeurs de signal discrètes associée à l'intervalle de mesure respectif, dans lequel le nombre prédéterminé est supérieur ou égal à 1, **caractérisé en ce que** ledit intervalle de mesure est rejeté pour la détermination de la grandeur caractérisant le comportement de décroissance de la fluorescence si plus que ledit nombre prédéterminé de photons de fluorescence ont été détectés.

**16.** Microscope (10) selon la revendication 15, **caractérisé en ce que** l'unité de traitement (44) comprend un convertisseur analogique-numérique (46) conçu pour numériser le signal de détecteur analogique.

**17.** Microscope (10) selon la revendication 15, **caractérisé en ce que** l'unité de traitement (44) comprend un comparateur (46) conçu pour numériser le signal de détecteur analogique en utilisant une valeur de seuil, de manière à ce que les valeurs de signal discrètes soient respectivement égales à une première valeur binaire ou à une seconde valeur binaire.

**18.** Microscope (10) selon l'une des revendications 15 à 17, **caractérisé par** un autre détecteur (48) conçu pour détecter les impulsions lumineuses d'excitation et pour générer un signal d'excitation analogique représentant les impulsions lumineuses d'excitation détectées, dans lequel l'unité de traitement (44) est conçue pour échantillonner le signal d'excitation analogique conformément aux périodes d'échantillonnage et le convertir en une séquence de valeurs de signal d'excitation discrètes associées aux périodes d'échantillonnage individuelles.

Fig. 1

Fig. 2

Laser (analog)

Detektor (analog)

Abtasttakt

Laser (digital)

Detektor (digital)

$\Delta t$

t

Fig. 3

Anzahl Photonen

40
30
20
10
0

+1

$\Delta t$

t

Fig. 4

Laser

analog
digital

Detektor

kein Photon

analog
digital

ein Photon

analog
digital

zwei Photonen

analog
digital

zwei Photonen
überlappend

analog
digital

mehr als
zwei Photonen

analog
digital

t

Fig. 5

**Fig. 6**

**Fig. 7**

Fig. 8

Fig. 9

Fig. 10

Fig. 11

Fig. 12

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011055330 A1
- DE 102011055945 A1
- DE 102011052334 A1
- WO 2010089363 A1

- DE 4339784 A1
- US 7999238 B2
- US 7215421 B2

**In der Beschreibung aufgeführte Nicht-Patentliteratur**

- **BAJZER, Z. et al.** Maximum-Likelihood Method For The Analysis Of Time-Resolved Fluorescence Decay Curves. *European Biophysics Journal,* 1991, vol. 20 (5), 247-262